# EUROPÄISCHE PATENTSCHRIFT

(11) **EP 0 467 875 B1**
(45) Veröffentlichungstag und Bekanntmachung des Hinweises auf die Patenterteilung: **20.11.1996**
(21) Anmeldenummer: 91890139.8
(22) Anmeldetag: 03.07.1991
(51) Int. Cl.: B23D 45/04, B24B 27/06, B24D 7/06

(54) **Vorrichtung zum Durchtrennen heisser Werkstücke**
Device for cutting-off warm pieces
Dispositif pour tronçonner des pièces chaudes

(30) Priorität: 18.07.1990 AT 1516/90
(43) Veröffentlichungstag der Anmeldung: 22.01.1992
(73) Patentinhaber: WEINGARTNER MASCHINENBAU GESELLSCHAFT m.b.H., A-4656 Kirchham 26 (AT)
(72) Erfinder: Rungger, Helmut, Roitham (AT)
(74) Vertreter: Hübscher, Helmut, Dipl.-Ing.

(56) Entgegenhaltungen:
- DE-A- 2 057 320
- DE-A- 2 452 960
- DE-A- 2 743 304
- DE-A- 3 213 629
- DE-C- 598 793
- DE-C- 734 298
- DE-U- 1 973 874
- DE-U- 7 702 118
- US-A- 3 835 740
- MASCHINENMARKT Band 79, Nr. 94, 1973, Seiten 2104-2106, Würzburg, DE; D. RENG: "IHA 1973: Bügel-, Band- und Kreissägemaschinen sowie andere spannende Trennmaschinen"

## Beschreibung

Die Erfindung bezieht sich auf eine Vorrichtung zum Durchtrennen heißer Werkstücke mit einem scheibenförmigen Trennwerkzeug, das über seine Antriebswelle in einer Vorschubeinrichtung gelagert ist.

Beim Durchtrennen heißer Werkstücke, wie Stahlrohre, Stahlprofile u. dgl. ist mit Werkstücktemperaturen zwischen 600 und 1100° C zu rechnen, was besondere Werkzeugbelastungen mit sich bringt, die den Einsatz herkömmlicher Trennvorrichtungen für kalte Werkstücke ausschließen. Aus diesem Grunde werden zum Durchtrennen heißer Werkstücke aus hochwertigen Spezialstählen gefertigte Kreissägeblätter verwendet, die mit einer sehr hohen Umfangsgeschwindigkeit zwischen beispielsweise 110 und 125 m/s angetrieben werden, um das Schnittgut im Bereich des Sägeeingriffes durch Reibung rasch bis zur Schmelztemperatur zu erhitzen und dann aus der Schnittfuge zu entfernen. Die durch die hohe Umfangsgeschwindigkeit bedingte, im Vergleich zur Umlaufzeit sehr kurze Eingriffszeit der Zähne bewirkt, daß die Zahnbelastung in einer zulässigen Grenze bleibt. Der Vorschub wird dabei durch den über die Vorschubeinrichtung ausgeübten Schnittdruck bestimmt. Nachteilig bei diesen bekannten Trennvorrichtungen ist allerdings, daß zufolge der notwendigen hohen Umfangsgeschwindigkeiten des Trennwerkzeuges mit einer erheblichen Lärmentwicklung zu rechnen ist, daß vergleichsweise hohe Antriebsleistungen erforderlich werden und daß sich Schnittflächen geringerer Qualität ergeben. Werden zum Durchtrennen heißer Werkstücke anstelle von Sägeblättern Schleifscheiben eingesetzt, die ebenfalls das Schnittgut im Eingriffsbereich auf Schmelztemperatur erhitzen und demzufolge mit hohen Umfangsgeschwindigkeiten angetrieben werden, so ergeben sich grundsätzlich vergleichbare Nachteile.

Um bei einer Vorrichtung zum Durchtrennen heißer Werkstücke sowohl Kreissägeblätter als auch Schleifscheiben einsetzen zu können, ist es bekannt (DE-U-77 02 118), das jeweilige Trennwerkzeug an einer Schwinge vorzusehen, die auf einem quer zum Werkstück verschiebbaren Schlitten gelagert ist, so daß beim Einsatz eines Kreissägeblattes der Vorschubantrieb über den Schlitten und beim Einsatz einer Schleifscheibe über die Schwinge erfolgen kann. Da einerseits der Schlitten und anderseits die Schwinge über Hydraulikzylinder mit einem vorgegebenen Hydraulikdruck beaufschlagt werden, stellt sich eine vom auftretenden Werkstückwiderstand abhängige Vorschubgeschwindigkeit ein. Mit größer werdendem Schnitteingriff verlangsamt sich die Vorschubgeschwindigkeitwegen des im wesentlichen konstant bleibenden Schnittdruckes, was jedoch im Hinblick aufdie angestrebte, reibungsbedingte Erwärmung des Schnittgutes auf Schmelztemperatur im Bereich des Sägeeingriffes und der damit verbundenen hohen Umfangsgeschwindigkeit des Trennwerkzeuges im Gegensatz zu einem Spanabtrag beim Durchtrennen kalter Werkstücke von untergeordneter Bedeutung ist. Die im Zusammenhang mit der reibungsbedingten Erwärmung des Schnittgutes auf Schmelztemperatur auftretenden Nachteile bleiben allerdings erhalten.

Der Erfindung liegt somit die Aufgabe zugrunde, eine Vorrichtung zum Durchtrennen heißer Werkstücke mit einem scheibenförmigen Trennwerkzeug der eingangs geschilderten Art so auszubilden, daß mit einer vergleichsweise geringen Antriebsleistung eine hohe Schnittflächenqualität sichergestelltwerden kann, und zwar bei einer geringen Lärmbelastung.

Die Erfindung löst die gestellte Aufgabe dadurch, daß das mit einer Umfangsgeschwindigkeit von 150 - 400 m/min umlaufende Trennwerkzeug über seinen Außenumfang verteilte, aufgelötete Schneidplatten aus Hartmetall trägt und daß die Vorschubeinrichtung einen Vorschubantrieb für eine zumindest angenähert konstante, vom Schnittdruck unabhängige Vorschubgeschwindigkeit des im Schnitteingriff befindlichen Trennwerkzeuges aufweist.

Durch die entsprechend wärmebelastbaren Schneidplatten des Trennwerkzeuges wird es im Zusammenhang mit der zumindest angenähert konstanten Vorschubgeschwindigkeit möglich, das heiße Werkstück zu zerspanen, und zwar unter weitgehend gleichbleibenden Schnittbedingungen für die Späne, so daß zunächst die Antriebsleistung für das Trennwerkzeug im Vergleich mit den sonst zu diesem Zweck eingesetzten Sägeblättern oder Schleifscheiben erheblich verringert werden kann. Da außerdem die Umfangsgeschwindigkeit gegenüber diesen bekannten Trennwerkzeugen entscheidend herabgesetzt ist, entfällt auch die von der Umfangsgeschwindigkeit abhängige Lärmbelastung, wozu noch kommt, daß durch das Abtragen einzelner Späne eine Schnittfläche hoher Qualität erreicht wird.

Der Einsatz von Trennwerkzeugen mit Schneidplatten aus Hartmetall ist zwar bei Vorrichtungen zum Durchtrennen von kalten Werkstücken bekannt, doch kann dieser bekannte Einsatz die Verwendung von solchen Schneidplatten für das Durchtrennen heißer Werkstücke nicht nahelegen, weil die Lötbefestigung der Schneidplatten wärmeempfindlich ist, so daß die Schnittgeschwindigkeit beim Durchtrennen kalter Werkstücke auf eine Umfangsgeschwindigkeit der Trennwerkzeuge von 80 bis 120 m/min begrenzt wird. Es hat sich jedoch in überraschender Weise herausgestellt, daß trotz der die zulässige Wärmebelastung der Lötbefestigung übersteigenden Werkstücktemperaturen eine Lötbefestigung der Schneidplatten möglich ist, wenn die Umfangsgeschwindigkeit des Trennwerkzeuges zwischen 150 und 400 m/min. vorzugsweise zwischen 180 und 250 m/min, gewählt wird, weil in diesem Fall die Wärmebelastung der Lötbefestigung aufgrund der entsprechend kürzeren Eingriffszeiten der Schneidplatten in einem zulässigen Rahmen bleibt. Die gegenüber einer Bearbeitung von kalten Werkstücken höhere Umfangsgeschwindigkeit des Trennwerkzeuges wird durch den erheblich geringeren Zerspanungswiderstand heißer Werkstücke möglich.

Zur Verlängerung der Standzeit des die Schneidplatten tragenden Scheibenkörpers des Trennwerkzeuges kann der Scheibenkörper außerhalb des Schnitteingriffbereiches mittels einer Kühleinrichtung gekühlt werden die unterschiedlich aufgebaut sein kann. Besonders einfache Konstruktionsverhältnisse ergeben sich allerdings, wenn die Kühleinrichtung aus wenigstens einer stirnseitigen Scheibenabdeckung mit gegen die Oberfläche des Scheibenkörpers offenen Strömungskanälen für ein Kühlmedium besteht, weil in diesem Fall das Kühlmedium, vorzugsweise Luft, mittels der Strömungskanäle über den zu kühlenden Oberflächenbereich geführt werden kann, um für eine besonders wirksame Wärmeabfuhr zu sorgen. Die Schneidplatten selbst, die eine höhere Wärmebelastung zulassen, sollen nicht gekühlt werden. Es empfiehlt sich daher unter Umständen, die Schneidplatten bzw. deren Haltergegenüber dem Scheibenkörperwärmeisoliert anzuordnen. Damit die Betriebstemperatur für die Schneidplatten möglichst bald erreicht wird, kann sogar für die Schneidplatte des Trennwerkzeuges eine Heizeinrichtung vorgesehen werden, beispielsweise in Form eines auf die Schneidplatten gerichteten Brenners im Umfangsbereich des Trennwerkzeuges.

Die Vorschubeinrichtung für das Trennwerkzeug könnte durch einen Schlitten od. dgl. gebildet werden. Üblich ist bei solchen Trennvorrichtungen jedoch die Lagerung des Trennwerkzeuges in einer Schwinge. Um diese bewährte Konstruktion beibehalten zu können und zugleich einen Vorschubantrieb für eine zumindest angenähert konstante Vorschubgeschwindigkeit zu schaffen, kann die Schwinge über eine angetriebene Kugelspindel als Vorschubantrieb verstellt werden.

In der Zeichnung ist der Erfindungsgegenstand beispielsweise dargestellt. Es zeigen die
- Fig. 1 und 2: eine erfindungsgemäße Vorrichtung zum Durchtrennen heißer Werkstücke in einer schematischen Seitenansicht in zwei unterschiedlichen Arbeitsstellungen,
- Fig. 3: eine Draufsicht auf diese Vorrichtung,
- Fig. 4: das Trennwerkzeug mit seiner stirnseitig geöffneten Schutzabdeckung in einer Seitenansicht in einem größeren Maßstab und
- Fig. 5: das Trennwerkzeug nach der Fig. 4 in einer Vorderansicht bei geschlossener Schutzabdeckung.

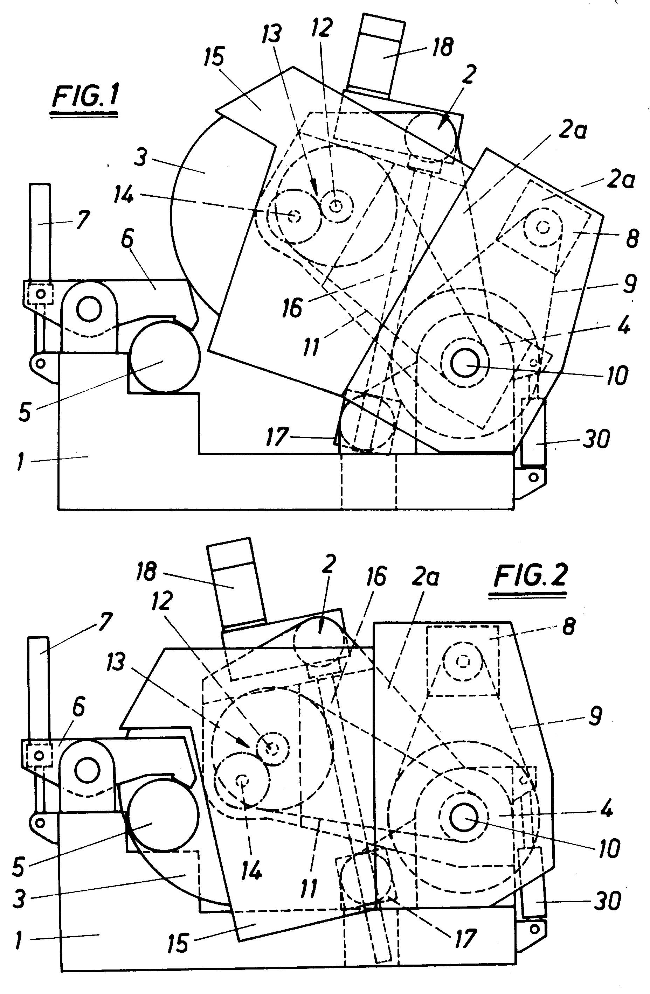

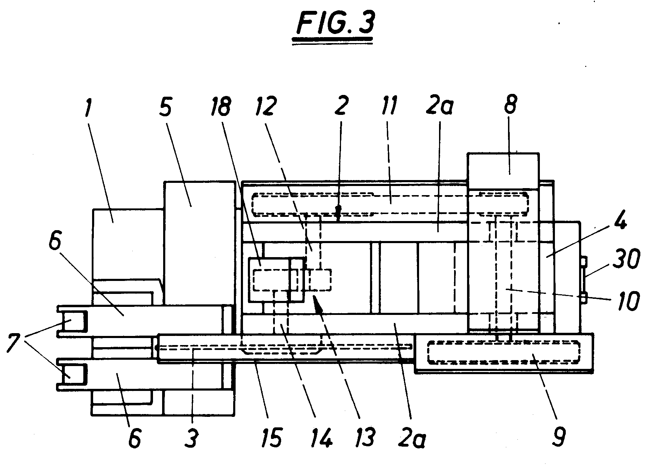

Wie die Fig. 1 bis 3 zeigen, besteht die dargestellte Vorrichtung zum Durchtrennen heißer Werkstücke im wesentlichen aus einem Grundgestell 1, auf dem eine Schwinge 2 mit dem Trennwerkzeug 3 schwenkbar gelagert ist, und zwar bildet die Schwinge 2 mit zwei Seitenwangen 2a eine einen Lagerbock 4 umgreifende Lagergabel, wie dies der Fig. 3 entnommen werden kann. Das zu durchtrennende Werkstück 5 wird im Gestell 1 beidseits des Schnitteingriffes durch Spannhebel 6 festgeklemmt, die über Spannzylinder 7 beaufschlagt werden.

Zum Antrieb des Trennwerkzeuges 3 dient ein Elektromotor 8, der auf der Schwinge 2 angeordnet ist und über einen Riementrieb 9 mit einer Vorgelegewelle 10 antriebsverbunden ist, die die Schwenkachse der Schwinge 2 koaxial durchsetzt und über einen weiteren Riementrieb 11 die Eingangswelle 12 eines zweistufigen Zahnradgetriebes 13 antreibt, das zwischen den Seitenwangen 2a der Schwinge 2 angeordnet ist und als Ausgangswelle die Antriebswelle 14 für das Trennwerkzeug 3 aufweist, das auf der einen Außenseite der Schwinge 2 fliegend gelagert und mit einer Schutzabdeckung 15 versehen ist.

Die Schwinge 2, die für das Trennwerkzeug 3 eine Vorschubeinrichtung darstellt, kann über eine Kugelspindel 16 verschwenkt werden, die in eine schwenkbar auf dem Gestell 1 gelagerte Spindelmutter 17 eingreift und schwingenseitig durch einen Motor 18 angetrieben wird, wobei die Anordnung so getroffen ist, daß sich für das Trennwerkzeug 3 beim Antrieb der Kugelspindel 16 eine im wesentlichen konstante Vorschubgeschwindigkeit ergibt.

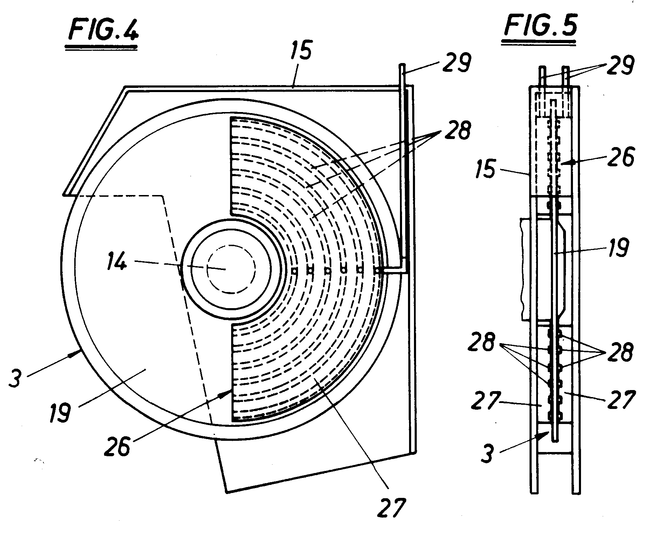

Wegen der unvermeidbaren Wärmeübertragung vom Werkstück 5 auf den Scheibenkörper 19 im Bereich des Schnitteingriffes empfiehlt sich eine Kühlung des Scheibenkörpers 19. Zu diesem Zweck ist im Bereich der Schutzabdeckung 15 eine Kühleinrichtung 26 vorgesehen, die entsprechend den Fig. 4 und 5 aus beidseits des Scheibenkörpers 19 angeordneten Scheibenabdeckungen 27 besteht, die gegen die Oberfläche des Scheibenkörpers 19 offene Strömungskanäle 28 bilden, so daß durch diese Strömungskanäle 28 über Zuleitungen 29 ein Kühlmedium, vorzugsweise Luft, geblasen werden kann, das den Scheibenkörper 19 kühlt und für eine entsprechende Wärmeabfuhr sorgt. Da auch das Gehäuse des Getriebes 13 der Wärmestrahlung der heißen Werkstücke ausgesetzt ist, kann auch diesem Getriebe eine Kühlung zugeordnet werden. Zumindest empfiehlt es sich, das Getriebegehäuse auf der dem Werkstück 5 zugekehrten Seite doppelwandig auszubilden, um eine entsprechende Wärmedämmung zu erreichen.

Zum Durchtrennen eines heißen Werkstückes 5 wird das Trennwerkzeug 3 nach dem schnittgerechten Spannen des Werkstückes 5 an dieses angestellt, um den anschließenden Trennvorgang unter einer zumindest angenähert gleichbleibenden Vorschubgeschwindigkeit durchführen zu können, und zwar über einen entsprechenden Antrieb der Kugelspindel 16 zur Schwenkverstellung der Schwinge 2, die zum Gewichtsausgleich über einen Zylinder 30 gegensinnig zum Gewichtsmoment beaufschlagt werden kann. Da zugleich das Trennwerkzeug 3 mit einer konstanten Umlaufgeschwindigkeit vom Antriebsmotor 8 über eine mehrstufige Untersetzung angetrieben wird, wird das heiße Werkstück 5 unter im wesentlichen gleichbleibenden Schnittbedingungen von den Schneidplatten zerspant, was nicht nur eine geringe Antriebsleistung erfordert, sondern wegen der gegenüber von Sägeblättern oder Schleifscheiben geringen Umfangsgeschwindigkeit des Trennwerkzeuges keine außerordentliche Lärmbelastung mit sich bringt. Die Umfangsgeschwindigkeit der Trennwerkzeuge soll jedoch im Vergleich zu Schneidplattenwerkzeugen für das Kalttrennen höher gewählt werden, um die Wärmebelastung des Trennwerkzeuges in zulässigen Grenzen halten zu können. Nach dem Durchtrennen des Werkstückes 5 kann das Trennwerkzeug 3 aus der in Fig. 2 dargestellten Endlage wieder in die Ausgangslage der Fig. 1 zurückgeschwenkt werden.

## Patentansprüche

1. Vorrichtung zum Durchtrennen heißer Werkstücke mit einem scheibenförmigen Trennwerkzeug (3), das über seine Antriebswelle (14) in einer Vorschubeinrichtung gelagert ist, dadurch gekennzeichnet, daß das mit einer Umfangsgeschwindigkeit von 150 - 400 m/min umlaufende Trennwerkzeug (3) über seinen Außenumfang verteilte, aufgelötete Schneidplatten aus Hartmetall trägt und daß die Vorschubeinrichtung einen Vorschubantrieb für eine zumindest angenähert konstante, vom Schnittdruck unabhängige Vorschubgeschwindigkeit des im Schnitteingriff befindlichen Trennwerkzeuges (3) aufweist.

2. Vorrichtung nach Anspruch 1, dadurch gekennzeichnet, daß das Trennwerkzeug (3) mit einer Umfangsgeschwindigkeit von 180 - 250 m/min antreibbar ist.

3. Vorrichtung nach Anspruch 1 oder 2, dadurch gekennzeichnet, daß für den Scheibenkörper (19) des Trennwerkzeuges (3) außerhalb des Schnitteingriffbereiches eine Kühleinrichtung (26) vorgesehen ist.

4. Vorrichtung nach Anspruch 3, dadurch gekennzeichnet, daß die kühleinrichtung (26) aus wenigstens einer stirnseitigen Scheibenabdeckung (27) mit gegen die Oberfläche des Scheibenkörpers (19) offenen Strömungskanälen (28) für ein Kühlmedium besteht.

5. Vorrichtung nach einem der Ansprüche 1 bis 4, dadurch gekennzeichnet, daß die Schneidplatten gegenüber dem Scheibenkörper (19) wärmeisoliert sind.

6. Vorrichtung nach einem der Ansprüche 1 bis 5, dadurch gekennzeichnet, daß für die Schneidplatten des Trennwerkzeuges (3) eine Heizeinrichtung vorgesehen ist.

7. Vorrichtung nach einem der Ansprüche 1 bis 6 mit einer eine Schwinge (2) zur Aufnahme des Trennwerkzeuges (3) bildenden Vorschubeinrichtung, dadurch gekennzeichnet, daß die Schwinge (2) über eine angetriebene Kugelspindel (16) als Vorschubantrieb verstellbar ist.

## Claims

1. A device for cutting hot workpieces by means of a disc-shaped cutting tool (3) mounted on a drive shaft (14) in a feed device, characterised in that hard-metal cutting plates are distributed around the outer periphery and welded on the cutting tool (3), which rotates at a peripheral speed of 150 - 400 m/min, and the feed device has a drive for advancing the cutting tool (3), when in cutting engagement, at an at least approximately constant speed, independent of the cutting pressure.

2. A device according to claim 1, characterised in that the cutting tool (3) is drivable at a peripheral speed of 180 - 250 m/min.

3. A device according to claim 1 or 2, characterised in that a device (26) for cooling the disc member (19) of the cutting tool (3) is provided outside the cutting-engagement region.

4. A device according to claim 3, characterised in that the cooling device (26) comprises at least one cover (27) at the front end of the disc, and with flow ducts (28) for a cooling medium, the ducts being open towards the surface of the disc member (19).

5. A device according to any of claims 1 to 4, characterised in that the cutting plates are heat-insulated from the disc member (19).

6. A device according to any of claims 1 to 5, characterised in that a heater is provided for the cutting plates of the cutting tool (3).

7. A device according to any of claims 1 to 6 comprising a feed device in the form of a rocker arm (2) for holding the cutting tool (3), characterised in that the rocker arm (2) is adjustable by a feed drive in the form of a driven ball spindle (16).

## Revendications

1. Dispositif de séparation de pièces façonnées chaudes, à l'aide d'un outil de séparation (3) discoïde, qui est monté à rotation, sur son arbre d'entraînement (14), dans un dispositif d'avancement, caractérisé en ce que l'outil de séparation (3), tournant à une vitesse périphérique de 150 à 400 m/min, porte des plaques de coupe en métal dur, réparties sur sa périphérie extérieure et montées par brasage, et en ce que le dispositif d'avancement présente un entraînement d'avancement destiné à assurer une vitesse d'avance au moins à peu près constante, indépendante de la pression de coupe, pour l'outil de séparation (3) se trouvant en contact de découpage.

2. Dispositif selon la revendication 1, caractérisé en ce que l'outil de séparation (3) peut être entraîné à une vitesse périphérique comprise dans la plage allant de 180 à 250 m/min.

3. Dispositif selon la revendication 1 ou 2, caractérisé en ce qu'un dispositif de refroidissement (26) est prévu, hors de la zone de contact de découpage, pour le corps discoïde (19) de l'outil de séparation (3).

4. Dispositif selon la revendication 3, caractérisé en ce que le dispositif de refroidissement 25) est constitué d'au moins un recouvrement de disque (27) frontal, avec des canaux d'écoulement (28) ouverts vers la surface du corps discoïde (19) et destinés à un milieu de refroidissement.

5. Dispositif selon l'une des revendications 1 à 4, caractérisé en ce que les plaques de coupe sont isolées thermiquement vis-à-vis du corps discoïde (19).

6. Dispositif selon l'une des revendications 1 à 5, caractérisé en ce qu'un dispositif de chauffage est prévu pour les plaques de coupe de l'outil de séparation (3).

7. Dispositif selon l'une des revendications 1 à 6, avec un dispositif d'avancement constituant un balancier (2) destiné à supporter l'outil de séparation (3), caractérisé en ce que la position du balancier (2) est réglable, à titre d'entraînement d'avancement, par l'intermédiaire d'une broche filetée à circulation de billes (16) entraînée.
